# EUROPÄISCHE PATENTSCHRIFT

(11) **EP 1 854 232 B1**
(45) Veröffentlichungstag und Bekanntmachung des Hinweises auf die Patenterteilung: **16.06.2010**
(21) Anmeldenummer: 06706970.8
(22) Anmeldetag: 15.02.2006
(51) Int. Cl.: H04B 13/02

(54) **ELEKTRISCHE SCHALTUNGSANORDNUNG**
ELECTRICAL CIRCUIT ARRANGEMENT
AGENCEMENT DE CIRCUIT ELECTRIQUE

(30) Priorität: 15.02.2005 DE 202005002403 U
(43) Veröffentlichungstag der Anmeldung: 14.11.2007
(73) Patentinhaber: Ident Technology AG, 82234 Wessling (DE)
(72) Erfinder: RICHTER, Wolfgang, 82319 Starnberg (DE)
(74) Vertreter: Rössig, Rolf
(86) Internationale Anmeldenummer: PCT/EP2006/001368
(87) Internationale Veröffentlichungsnummer: WO 2006/094606

(56) Entgegenhaltungen:
- EP-A- 1 033 687
- WO-A-00/15931
- US-A- 6 002 341

## Beschreibung

Die Erfindung richtet sich auf eine elektrische Schaltungsanordnung zur Generierung von Signalereignissen die als solche zur Einleitung, Abwicklung oder Durchführung von Schalt-, Stell oder Freigabevorgängen herangezogen werden können.

Aus EP-A-1033687 ist ein Schaltungssystem bekannt das eine Signalsendekomponente (Transmitter) umfasst über welche kodierte Signale in den Körper eines Anwenders eingekoppelt und indem diese über den Körper des Anwenders geleitet werden, einem Empfangssystem zugeführt werden können.

Insbesondere im Automotive-Bereich ist es bekannt, Stellvorgänge zur motorisch unterstützen Herbeiführung anwenderseitig geforderter Umgebungskonfigurationen, z.B. Sitz-, Spiegel-, und Lenkradkonfigurationen herbeizuführen, indem durch den Anwender entsprechende Eingabeschalter betätigt werden. Durch diese Eingabeschalter werden Schaltsignale generiert, die über ein Kabelsystem an eine Steuereinrichtung, oder ggf. unmittelbar an die jeweiligen Stelltriebe geleitet werden.

Derartige Eingabeschalter sind üblicherweise an einer ergonomisch gut zugänglichen, intuitiv leicht auffindbaren Stelle im Kraftfahrzeug angeordnet. Die Verkabelung derartiger Eingabeschalter mit der Steuereinrichtung, oder mit den zugeordneten Stelltriebseinrichtung erweist sich in der Praxis als aufwendig, insbesondere, wenn derartige Verkabelungen nachträglich zur Ausstattungserweiterung montiert werden. Auch bei anderen Anwendungsfällen, z.B. im Bereich der Haustechnik bereitet die Anbringung der Eingabeschnittstellen und die Verkabelung derselben mit den Auswertungsschaltungskomponenten häufig Probleme.

Der Erfindung liegt die Aufgabe zugrunde, Lösungen bereitzustellen die es ermöglichen einen Signaltransfer, oder eine Signalgewinnung insbesondere zur Abwicklung der genannten Abläufe zum Beispiel zur Stellvorgangsabwicklung, Stelltriebsansteuerung, Konfigurationsänderung und/oder zum Autorisierungsnachweis in vorteilhafter, beispielsweise in einer hinsichtlich des Installations- und Nachrüstaufwands vorteilhaften weise zu bewerkstelligen.

Diese Aufgabe wird erfindungsgemäß durch eine elektrische Schaltungsanordnung mit den in Patentanspruch 1 angegebenen Merkmalen gelöst.

Dadurch wird es auf vorteilhafte Weise möglich, über den Anwender die hinsichtlich seiner Eingabeoperation indikativen Signale zu der Schaltkoznponente zu übertragen, wobei diese Übertragung nur stattfinden kann, wenn der Anwender tatsächlich die Eingabe veranlasst und damit als Signalübertragungsmedium zur Verfügung steht.

Es ist möglich, die Eingabekomponente so zu gestalten, dass diese ein Eingabefeld zur Abwicklung einer Bereichsauswahl umfasst. Ein derartiges Eingabefeld kann mit Stellsymbolen unterlegt sein, so dass beispielsweise anhand eines Keilbalkens erkennbar ist, welche Punkte innerhalb des Eingabefeldes welche Wirkung haben. Mit diesem Ansatz lassen sich insbesondere Stellvorgänge für eine Temperaturwahl, Lautstärke, Bass, Höhen und Helligkeiten abwickeln.

In Kombination mit der vorangegangen Maßnahme, oder auch alternativ hierzu ist es auch möglich, die Eingabekomponente so auszubilden, dass diese ein Nummern- und/oder Ziffernfeld umfasst. Über eine derartig ausgestaltete Eingabekomponente lassen sich insbesondere PIN-Eingaben, oder anderweitige, dem Autorisierungsnachweis dienende Eingaben veranlassen. Diese Ausgestaltung eignet sich damit insbesondere für Türschlosssysteme.

Weiterhin ist es auch möglich, die Eingabekomponente so auszugestalten, dass diese eine Stellknopf- oder Schiebereinrichtung umfasst. Die Eingabekomponente kann so ausgebildet sein, dass diese hinsichtlich ihres äußeren Erscheinungsbildes wie herkömmliche, für den jeweiligen Einsatzzweck typische Bedienflächen (z.B. Heizungs- Klima-, Sitzkonfigurations-, Audio-, Zeiterfassungs-, Navigationssystem-Bedienflächen) erscheint. Die ggf. noch vorhandene Restmechanik kann auf Positionserfassungsmittel, z.B. Potentiometer, Drehpositionssensoren sowie etwaige für eine bestimmte Schaltwahrnehmung erforderliche Rast-, oder Haptik-Strukturen reduziert sein. Die Eingabekomponente kann insbesondere so aufgebaut sein, dass für den Anwender nicht erkennbar ist, dass er selbst als Signaltransfermedium herangezogen wird.

Es ist möglich, im Bereich der Eingabekomponente eine Displayeinrichtung vorzusehen, durch welche die momentan selektierten Eingaben, oder deren Auswirkungen visualisiert werden. Die Eingabekomponente kann insoweit auch als Touch-Screen-Struktur realisiert sein. Die Eingabekomponente kann auch als Touchpad-, Trackball-, oder Joystickstruktur ausgeführt sein. Die Energieversorgung der Eingabeeinrichtung kann durch eigene Energieträger, Batterien, Solar-Zellen, oder auch Absorberstrukturen die als solche die Betriebsenergie aus dem über den Anwender nahegebrachten Wechselfeld beziehen, bewerkstelligt sein.

Es ist möglich, die Eingabekomponente als praktisch verkabelungsfrei nutzbare Struktur zu realisieren. Die Eingabekomponente kann insoweit als frei montierbares, im wesentlichen flaches Eingabeflächenelement ausgebildet sein. Eine besonders flache Bauweise ergibt sich hierbei indem die Eingabekomponente als Folienstruktur ausgebildet ist. Diese Folienstruktur kann an einer, bei einem typischen Anwendungsfall ergonomisch gut zugänglichen Ort angebracht sein. Die Anbringung kann an Wänden, oder Gehäusen ohne Bedarf nach Durchbrüchen oder der Verlegung von Versorgungsleitungen erfolgen. Eine besonders einfache Montierbarkeit der Eingabekomponente wird hierbei erreicht, indem diese mit einer Kleberückseite versehen ist.

Die für die Signalrückgewinnung, oder den Signalabgriff vorgesehene Schnittstelleneinrichtung kann insbesondere in eine Türeinrichtung, in eine Sitzeinrichtung, eine Lenkradeinrichtung, oder Türgriffeinrichtung integriert sein.

Für die Bewerkstelligung des Signaltransfers von der Eingabekomponente zu der Schnittstelleneinrichtung eigenen sich in besonderem Maße zwei, ggf. auch in Kombination miteinander realisierbare Ansätze. Möglich ist hierbei insbesondere der Ansatz, dass die Eingabekomponente eine Elektrodeneinrichtung und eine daran angeschlossene elektronische Schaltung umfasst, und dass über die Elektrodeneinrichtung im Bereich eines Selektionsabschnittes ein elektrisches Feld nach Maßgabe eines Datenmusters moduliert und in den Anwender eingekoppelt wird. Dieses Feld - und damit auch das Datenmuster können über die Schnittstelleneinrichtung abgegriffen werden.

Möglich ist weiterhin auch eine Impedanzmodulation im Bereich der Eingabekomponente. So ist es möglich, die Resonanzfrequenz eines im Bereich der Eingabekomponente vorgesehen Schwingkreises zu modulieren, oder die Elektrodeneinrichtung über die elektronische Schaltung moduliert zu erden. Diese Ereignisse im Bereich der Eingabekomponente sind über den Anwender (als Übertragungsmedium) im Bereich der Schnittstelleneinrichtung erfassbar, so dass ein entsprechender Informations- oder Signalfluss ermöglicht wird.

Bei der vorangehend genannten Schnittstelleneinrichtung handelt es sich um eine Elektrodeneinrichtung. Diese Elektrodeneinrichtung ist vorzugsweise als äußerlich vollflächig isolierte Flächenelektrode, oder auch als vorzugsweise isolierter Draht ausgebildet. Es fließen im wesentlichen keine über den zum Feldaufbau, oder Feldabgriff an der Schnittstelleneinrichtung erforderlichen Stromfluss hinausgehenden Ströme über diese Schnittstelleneinrichtungen.

Auf Grundlage des der Erfindung zugrunde liegenden Lösungsgedankens wird es möglich, auch das Kriterium "Präsenz des Anwenders" bei der Abwicklung der Schaltungsabläufe als Logik-Paramter zu berücksichtigen.

In Fahrzeugen, insbesondere Kraftfahrzeugen, sitzen beispielsweise Personen auf Sitzen und bedienen Schalter, die in ihrem Einflussbereich eine Wirkung erzeugen. So kann etwa Licht ein- und ausgeschaltet werden oder Lüftung und Temperatur geregelt werden. Insbesondere in Kraftfahrzeugen ist es möglich anstelle von für Fahrer und Beifahrer getrennten Schaltern gemeinsame Schalter vorzusehen, mit welchen die gewünschten Funktionen im Umgebungsbereich ein- oder ausgeschaltet werden können. Es ist auf Grundlage des erfindungsgemäßen Lösungsansatzes möglich, zu gewährleisten, dass eine unzulässige, oder irrtümliche Bedienung von Knöpfen und Eingabestrukturen durch einen Beifahrer keine, oder nur bestimmte, noch zulässige Funktionen haben. Von besonderer Bedeutung sind Bedienelemente, die eigentlich nur der Fahrer zum Fahrbetrieb bedienen darf und die dem Beifahrer zugänglich sind und versehentlich betätigt werden könnten, Fehlbetätigungen solcher Schalter können auf Grundlage der erfindungsgemäßen Schaltung unterbunden werden.

Durch die erfindungsgemäße Schaltung wird es insbesondere möglich, die einen Schalter oder eine Stellvorrichtung betätigende Person bzw. ihre Sitzposition zu identifizieren und nur für diese bestimmten Funktionen zugänglich zu machen. Dabei wird vorzugsweise ein Dialog über die Haut einer bedienenden Person geführt.

In einem Fahrzeugsitz befinden sich oft Folien, um den Sitz zu heizen oder eine Sitzbelegung nachzuweisen. Unter Einbeziehung der erfindungsgemäßen Schaltung kann diese Folie dazu verwendet werden, gegenüber einer auf ihr sitzenden Person ein elektrisches Wechselfeld aufzubauen. Dieses Wechselfeld bildet eine Art synthetische Aura mit der Person, weil sich die Ladungen auf der Hautoberfläche verteilen.

Berührt eine auf einer solchen Folie sitzende Person einen Schalter, so können die aufgeprägten Wechselfelder gegen diesen abgeleitet werden. Die Erfindung nutzt den Umstand, dass es möglich ist, diese Wechselfelder mit identifizierbaren Daten zu modulieren und über die Haut einer von diesem Sitz aus agierenden Person an einen selektierten Schalter und zurück zu übertragen. Da sowohl die Sitzfolie als auch der Schalter mit der Fahrzeugmasse verbunden ist, handelt es sich im Prinzip um einen Wechselstromkreis. Besonders vorteilhaft zeigt sich die Ausführung der Erfindung, da nur sehr wenige Bauteile verwendet werden müssen.

Weitere Einzelheiten und Merkmale der Erfindung ergeben sich aus der nachfolgenden Beschreibung in Verbindung mit der Zeichnung. Es zeigt:
- **Figur 1**: eine vereinfachte Darstellung der erfindungsgemäßen, eine Eingabekomponente und eine Schaltkomponente umfassenden Schaltung;
- **Figur 2**: eine vereinfachte Darstellung zur Erläuterung weiterer möglicher Einzelheiten der Schaltkomponente;
- **Figur 3**: eine vereinfachte Darstellung zur Erläuterung des Aufbaues einer Eingabekomponente mit einem darin zur Signalerzeugung vorgesehenen Schieberegister mit nachgeschaltetem Pulsweiten-Modulator (PWM);
- **Figur 4**: eine Skizze zur Erläuterung einer Anwendungsform der erfindungsgemäßen Schaltung bei einem Türschließsystem mit autorisierungsabhängiger Türverriegelung;
- **Figur 5**: eine Skizze zur Erläuterung einer Anwendungsform der erfindungsgemäßen Schaltung bei einem Sitz mit integrierten Komfortantrieben;
- **Figur 6**: eine Skizze zur Erläuterung einer Anwendungsform der erfindungsgemäßen Schaltung als Stelleinrichtung für eine Sitzheizung.

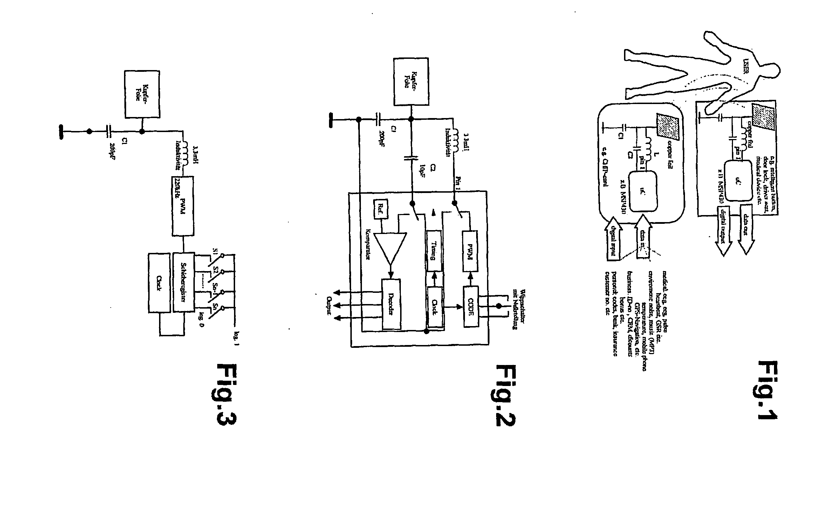

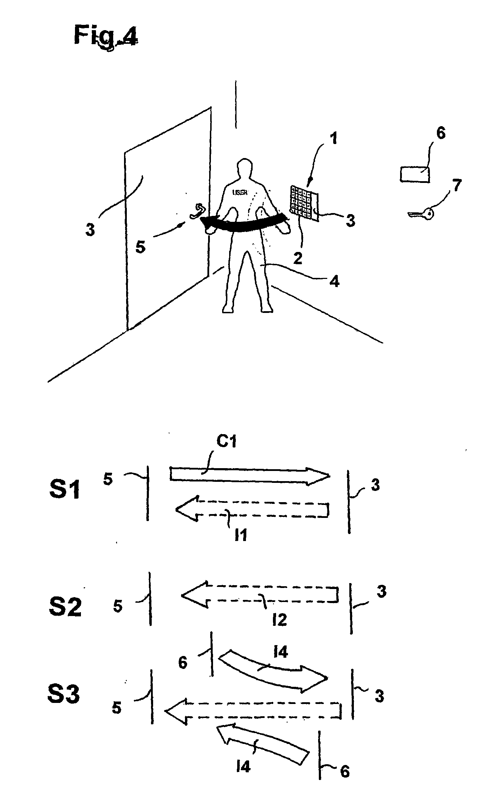

Figur 1 zeigt eine Schaltungsanordnung, in der bei einem Serienschwingkreis an der Verbindungsstelle zwischen Spule und Kondensator eine Kupferfolie angekoppelt ist. Diese Elektrode ist isoliert z.B. in einem Fahrersitz untergebracht. Sie bildet eine Seite eines Kondensators. Eine auf diesem Sitz sitzende Person bildet (mit dem Gesäß) die Gegenseite. Da die menschliche Haut leitfähig ist, wird das modulierte Wechselfeld auf diese übertragen. In einem Schalter befindet sich eine Aufnahmefolie und ein Parallelschwingkreis, dessen Ausgang über einen Kondensator an einen Komparator geführt ist. Berührt die auf der ersten Folie sitzende Person diesen Schalter, so wird zwischen Finger und der Folie im Schalter ebenfalls ein Kondensator gebildet, sodass das modulierte Wechselfeld am Komparator erscheint. Dieser ist so eingestellt, dass sein Schwellwert das modulierte Wechselfeld in ein Rechtecksignal wandelt. Mit einem Detektor können nun die Daten aus der Resonanzfrequenz zurückgewonnen werden und an das Steuergerät des Kraftfahrzeugs weitergeleitet werden.

Ein Oszillator erzeugt beispielsweise über einen Serienschwingkreis ein Wechselfeld mit hohem Spannungspegel (> 50 Volt). Über einen Modulator können Daten der Resonanzfrequenz aufgeprägt werden.

Figur 2 zeigt einen Mikrocontroller-Baustein. An einem seiner Pins (z.B. Pin 1) ist der Serienschaltkreis angeschaltet. Ein Kondensator C2 führt von diesem an einen weiteren Pin, der intern mit einem Komparator verbunden werden kann. Während des Sendebetriebs ist dieser Pin intern an Masse gelegt, da sonst Hochspannung in den Controller gelangt und diesen zerstören könnte. Dieser Mikrocontroller ist in der Lage, Pin 1 so ein- und auszuschalten, dass der Serienschwingkreis in Resonanz kommt und an der Kupferfolie eine erhöhte Spannung (Wechselfeld) zur Verfügung steht. Dieses wird dahingehend moduliert, dass ein Identifikationszeichen (zum Beispiel "F" für Fahrer oder "B" für Beifahrer oder "R" für Rücksitz usw.) mit einer bestimmten Ausgabegeschwindigkeit (Bitrate) die Erzeugung des Wechselfeldes beeinflusst. Im einfachsten Fall wird das Wechselfeld bei einer logischen 1 erzeugt, während bei einer logischen 0 die Länge des Bits ausgeschaltet bleibt (ASK). Genauso ist es möglich, für eine 1 eine leicht von der Resonanzfrequenz erhöhte und für eine logische 0 eine leicht von der Resonanzfrequenz erniedrigte Frequenz zu erzeugen (FSK). Im Prinzip sind alle bekannten Modulationsverfahren, die sich digital ausgeben lassen, anwendbar. Die Schaltung im Schaltelement ist genauso aufgebaut wie die im Sitz. Allerdings wird hier Pin 1 zunächst intern auf Masse gelegt, so dass der Serienschwingkreis sich in einen Parallelschwingkreis wandelt, an dessen Mittelanzapfung der Kondensator C2 zum internen Komparator geführt wird. Dieser Kondensator ist kleiner als der des Resonanzkreises, damit die Abweichung vom Maximum der Resonanzfrequenz nicht zu groß wird. Das über den Finger der Bedienperson eingespeiste Wechselstromsignal veranlasst den Parallelschwingkreis bei Resonanzbedingung eine hohe Eingangsimpedanz zu bilden. Somit fällt ein hoher Spannungspegel am Kondensator damit am internen Komparator ab. Nachdem die erste Schaltung ihre Identifizierungsdaten ausgesendet hat, legt sie ebenfalls den Schwingkreis am Pin 1 intern gegen Masse, und ist damit auf Empfang. Nun kann der Schalter seinerseits den Serienschwingkreis modulieren (den kleinen Kondensator C2 gegen Masse schalten) und die Datenrichtung wird dadurch umgekehrt. Dies ist sinnvoll, wie die erste beispielhafte Anwendung zeigt.

### Beispielhafte Anwendung :

Im Fahrer- und Beifahrersitz befinden sich Sitzheizfolien, die jeweils mit einer erfindungsgemäßen Schaltkomponente gekoppelt sind. Die Schaltung im Fahrersitz sendet kontinuierlich ein "F", wobei sie nach jedem Aussenden eines "F" kurzzeitig auf Empfang geht, während die Schaltung im Beifahrersitz ein "B" aussendet. Auf dem Armaturenbrett soll sich ein Schalter befinden, der sowohl nach links als auch nach rechts gedreht werden kann (Wippe) und der für die Temperatureinstellung der Sitzheizung verwendet werden soll. Diese Sitzheizungen sind mit Regeltransistoren an die Schaltung im Sitz angeschlossen und können durch diese beeinflusst werden. Betätigt der Fahrer beispielsweise den Schalter, um eine höhere Temperatur zu wählen, so sendet dieser Schalter beispielsweise ein Pluszeichen "+" über die Haut des Fahrers in seinen Sitz. Die dortige Schaltung erkennt das Plus und veranlasst die Heizungsregelung, die Temperatur zu erhöhen. Betätigt anschließend der Beifahrer denselben Schalter, beispielsweise um seine Sitztemperatur zu erniedrigen, so betätigt er den Schalter in die andere Richtung. Dieser sendet daraufhin ein Minus "-" über die Haut des Beifahrers in dessen Sitz und dessen Schaltung usw. Ohne Verwendung eines externen Steuergerätes können so auf einfache Weise unterschiedliche Temperaturen für unterschiedliche Sitze eingestellt werden, obwohl stets der gleiche Schalter betätigt wird. Dies bedeutet einen geringeren Aufwand bei höherem Komfort (zweckmäßigerweise können Schalter, die Fahrer und Beifahrer gleichzeitig bedienen sollen, in der Mitte des Armaturenbretts oder auf der Mittelkonsole angebracht sein). Dazu zählen neben Heizungseinstellung, Knöpfe für Licht auf der jeweiligen Seite oder Sitzverstellung.

In Flugzeugen kann dieser Schalter die Audioanlage, die Belüftung oder den Stewardessenruf lokal bestimmen. Auf einem Display sieht die Stewardess dann, wer die Taste gedrückt hat und muss nicht umständlich nach den Lämpchen suchen. Anstelle eines Mikrocontrollers lässt sich zur Signalerzeugung auch ein Schieberegister mit nachgeschaltetem Pulsweiten-Modulator (PWM) verwenden (Figur 3).

### Weitere Ausführungsformen

Die Schaltung lässt sich auch in Schlüsseln oder Schlüsselanhängern unterbringen um, mit einer, in einem Schloss untergebrachten Gegenstelle zu kommunizieren, wenn sich der Schlüssel im Schloss befindet. Ebenso lassen sich Bedienelemente und Fahrzeugteile (Armlehnen, Hebel, Pedale, Gurte, Beleuchtungen in Seitenfächern) mit der erfindungsgemäßen Schaltung ansteuern. Desweiteren lassen sich variable Daten, z.B. von Sensoren, Timern usw. bis hin zu Audio (z.B. an einen Kopfhörer oder einer Hörhilfe) übertragen. Letztere Möglichkeit könnte Schwerhörigen die Anweisungen eines Naviagtionssystems im Fahrzeug über das Lenkrad ohne störende Umgebungsgeräusche an einen Ohrhörer übertragen.

Die erfindungsgemäße Schaltung eignet sich insbesondere zur Schaffung einer zwanglos positionierbaren und einfach montierbaren Audiobedienfläche. Die weiteren Komponenten des Audio- oder auch Videosystems können diebstahlsicher an relativ unzugänglichen Bereichen, z.B. Türinnenraum, oder Kofferraumseitenbereich angeordnet werden. Die erfindungsgemäße Schaltung ermöglicht es auch in einem potentiellen Insassenaufschlagsbereich des Fahrgastraumes die hierin ggf. vorgesehenen Schalteinrichtungen so auszubilden, dass diese in geringerem Maße verletzungsrelevant sind. Durch die erfindungsgemäße Schaltung können auch crashsicher angeordnete Anzeigesysteme, Sitze mit eigenen Verstelleingabegeräten und Zusatzeingabeschnittstellen für Bedienungs- oder Stellbefehle bereitgestellt werden.

Figur 4 zeigt beispielhaft einen Anwendungsfall für die erfindungsgemäße Schaltung bei einem Türsystem. Auf Handhöhe ist in Nachbarschaft zu einer Türe 3 eine erfindugsgemäße Eingabekomponente 1 angebracht. Diese Eingabekomponente 1 umfasst ein Ziffernfeld 2 und eine Displayeinrichtung 3. Berührt der Anwender 4 die Eingabekomponente 1 im Bereich des Ziffernfeldes 2, so wird in den Anwender ein Ereignis eingekoppelt, das indikativ ist für die Auswahl einer Ziffer in dem Ziffernfeld. Dieses Ereignis ist über die türseitig vorgesehene, in die Türklinke, einen Türbeschlag, oder ein Schlossblech integrierte Schnittstelleneinrichtung 5 abgreifbar und insoweit einer weiteren signalverarbeitenden Betrachtung zugänglich.

Es ist möglich, das System so zu konfigurieren, dass ein Signaltransfer (großes Pfeilsymbol) bereits ermöglicht ist, wenn sich der Anwender 4 hinreichend nahe an der Türe 3 befindet. Es ist auch möglich, eine Kontaktierung der Schnittstelleneinrichtung zu fordern. Es ist möglich, während der Bedienung der Eingabekomponente simultan einen Signaltransfer durchzuführen. Es ist auch möglich, die Eingabekomponente so auszubilden, dass zunächst eine bestimmte Ziffern- oder Zeichensequenz an der Eingabekomponente einzugeben ist, und diese erst dann übermittelt wird, wenn eine Absendetaste selektiert wird, eine bestimmte Anzahl von Selektionen erfolgt ist, eine bestimmte Zeit verstrichen ist, oder ein anderweitig spezifiziertes Sendekriterium erfüllt ist. Als Sendekriterium eignet sich insbesondere auch das Vorliegen des Berührungskontaktes mit der Türklinke, oder ein besonderes Intensitätszunahmeprofil bei der Annäherung an die Klinke.

Es ist möglich, schaltungstechnisch Vorkehrungen zu treffen, durch welche eine Verschlüsselung der zu der Türe, bzw. der dort vorgesehen Schnittstelleneinrichtung hin übertragenen Daten erfolgt.

es ist möglich, die Zugangsverschaffung, d.h. die Freigabe der Türe weiterhin davon abhängig zu machen, ob der Anwender 4 weitere für den Autorisierungsnachweis vorgesehene Kriterien erfüllt. So ist es möglich weiterhin das Mitführen einer ID-Karte 6 und/oder auch eines mechanischen Schlüssels 7 zu fordern. Über die ID-karte können bevorzugt ebenfalls auf Grundlage feldelektrischer Wechselwirkungseffekte in den Anwender Signale eingekoppelt werden, die aufseiten der Eingabekomponente 3, und/oder der türseitigen Systemkomponente ausgelesen werden können. Von diesen Signalen kann beispielsweise eine bestimmte erforderlich PIN-Nummer ermittelt werden, so dass es zur Zugangsverschaffung für verschiedene Anwender verschiedener PIN-Nummern bedarf. Die über die ID-Karte 6, oder die Eingabeeinrichtung 3 bereitgestellten Informationen können auch bei einer Zeiterfassung oder Aufenthaltsdokumentation Berücksichtigung finden.

Wie in der Skizze S1 angedeutet, kann ist es möglich über die Schnittstelleneinrichtung 5 ein Signal C1 in Form eines modulierten Feldes in den Anwender 4 einzukoppeln. Entsprechend der Betätigung der Eingabekomponente 3 kann durch diese eine Impedanzmodulation erfolgen, so dass anhand dieser Impedanzmodulation eine Rückführung von Informationen I1 in den Bereich der Schnittstelleneinrichtung 5 erfolgt.

Wie in der Skizze S2 angedeutet, ist es auch möglich, die Eingabekomponente 3 so auszubilden, dass diese "unidirektional" Informationen I2 zur Schnittstelleneinrichtung 5 unter entsprechender Signaleinkoppelung in den Anwender 4 übermittelt.

Gemäß Skizze S3 ist es möglich zusätzliche Informationen I3, I4 durch anwenderseitig mitgeführte Schaltungen (ID-Karte 6) bereitzuhalten, die türseitig oder Eingabeschaltungsseitig Berücksichtigung finden können.

Die vorangehend unter Bezugnahme auf ein Türsystem umrissenen Maßnahmen können in ähnlicher Form auch bei der Abwicklung von Schaltungs- und Steuerungsvorgängen zu anderweitigen Zwecken, insbesondere im Automotive-Bereich Anwendung finden und sind damit auch über den konkret beschriebenen Anwendungsfall hinaus Gegenstand der vorliegenden Erfindung.

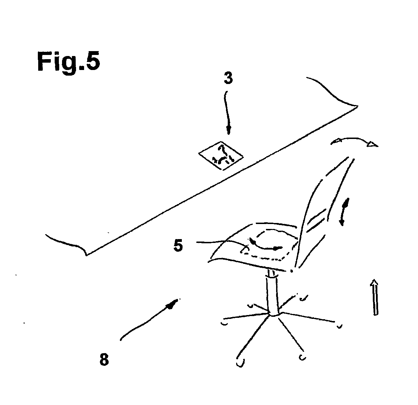

Figur 5 zeigt einen Anwendungsfall für den Einsatz der erfindungsgemäßen Schaltung bei einer mit Stelltrieben ausgestatteten Sitzeinrichtung 8. Die Sitzeinrichtung umfasst eine in das Sitzpolster integrierte Elektrodeneinrichtung 5. Die Ansteuerung der Sitzeinrichtung hinsichtlich Sitzhöhe, Rückenlehnenneigung, Rückenlehenkrümmung und ggf. Einstelloptionen erfolgt über eine Eingabeeinrichtung 3, die als flache Folieneinheit in einer anwenderseitig ausgewählten Stelle abgelegt, insbesondere an einer Tischfläche angebracht werden kann. Durch Berührung der Eingabeeinrichtung 3 an den symbolhaft kenntlich gemachten Bereichen kann ein Signalrückfluss in die Schnittstelleneinrichtung 5 und damit einhergehend eine entsprechende Einstellung des Sitzes erreicht werden. Dieses Konzept eignet sich insbesondere auch für Stühle in Fahrzeugen, Stühle in Pflegeanstalten, sowie insbesondere Krankenhausbetten. Es ist möglich, in Nachbarschaft zu typischen Stellplätzen von Stühlen, oder Betten Bedienflächen in Form jener Eingabekomponenten 3 vorzusehen durch welche eine Konfigurationsänderung des Stuhls, oder des Bettes oder anderweitigen konfigurierbaren Einrichtung ermöglicht wird. Auch hier wird es möglich, die Zulässigkeit des Stellvorganges von dem Vorliegen weiterer Signale, insbesondere einer seitens eines Pflegpersonals oder eines Patienten mitgeführten ID-Karte (ebenfalls mit der Fähigkeit zur Signaleinkoppelung) abhängig zu machen.

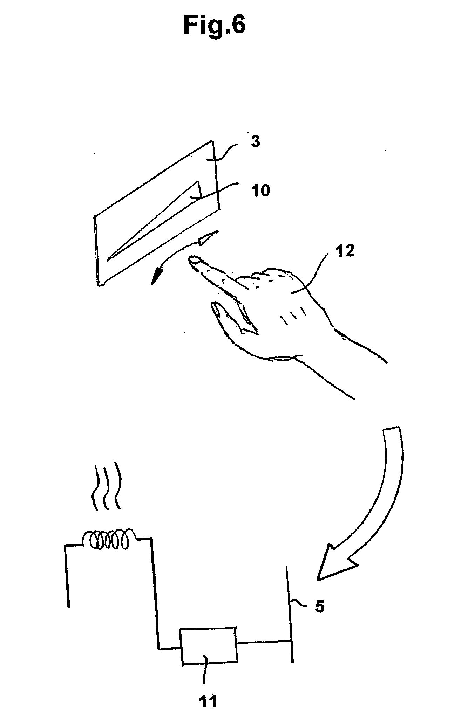

Figur 6 zeigt schematisch eine Eingabekomponente 3 mit einem darauf angedeuteten Keilbalken 10. in Abhängigkeit von der Berührposition des Keilbalkens 10 durch die hand 12 eines Anwenders werden hinsichtlich dieser Berührposition indikative Signale in den Anwender eingekoppelt. Diese Signale können über die Schnittstelleneinrichtung 5, die sich in Nachbarschaft zu dem Anwender befindet abgegriffen und über eine Schaltkomponente 11 verarbeitet und zur Heizungssteuerung herangezogen werden. Der Signaltransfer von der Eingabekomponente 3 zu der Schnittstelleneinrichtung 5 erfolgt kabelfrei über den Anwender.

Die Schaltkomponente 11 kann in die zu steuernde Baugruppe, z.B. Sitz, Türschloss, Heizungsventil, Leistungssteller etc. integriert sein

## Patentansprüche

1. Elektrische Schaltungsanordnung mit:
- einer Eingabekomponente (1) zur Bewerkstelligung eines Selektionsvorganges zur Generierung eines Eingabeereignisses, und
- einer Schaltkomponente (11) zur Generierung eines Schaltsignales auf Grundlage einer signalverarbeitenden Auswertung des Eingabeereignisses,
- wobei die Eingabekomponente derart ausgebildet ist, dass im Rahmen des Selektionsvorganges in einen die Eingabekomponente betätigenden Anwender das Eingabeereignis auf Grundlage feldelektrischer wechselwirkungseffekte eingekoppelt wird, und
- dass die Schaltkomponente eine Schnittstelleneinrichtung (5) umfasst, zur Erfassung des in den Anwender eingekoppelten Eingabeereignisses,
- wobei die Eingabekomponente und die Schnittstelleneinrichtung in Einsatzposition derart angeordnet sind dass der Signaltransfer zwischen der Eingabekomponente und der Schnittstelleneinrichtung unter Einbindung des Anwenders (4) in eine Signalübertragungsstrecke erfolgt, wenn dieser die Eingabekomponente betätigt, **dadurch gekennzeichnet, dass**
die Eingabekomponente ein Eingabefeld zur Abwicklung einer Bereichsauswahl, oder ein Nummern- und/oder ziffernfeld umfasst.

2. Schaltungsanordnung nach Anspruch 1, **dadurch gekennzeichnet, dass** die Eingabekomponente eine Displayeinrichtung umfasst.

3. Schaltungsanordnung nach Anspruch 1 oder 2, **dadurch gekennzeichnet, dass** die Eingabekomponente als frei montierbares, im wesentlichen flaches Eingabeflächenelement ausgebildet ist.

4. Schaltungsanordnung nach wenigstens einem der Ansprüche 1 bis 3, **dadurch gekennzeichnet, dass** die Eingabekomponente als Folienstruktur ausgebildet ist.

5. Schaltungsanordnung nach wenigstens einem der Ansprüche 1 bis 4, **dadurch gekennzeichnet, dass** die Eingabekomponente mit einer Kleberückseite versehen ist.

6. Schaltungsanordnung nach wenigstens einem der Ansprüche 1 bis 5, **dadurch gekennzeichnet, dass** die Schnittstelleneinrichtung in eine Sitzeinrichtung, Lenkradeinrichtung, Türgriffeinrichtung integriert ist.

7. Schaltungsanordnung nach wenigstens einem der Ansprüche 1 bis 6, **dadurch gekennzeichnet, dass** die Eingabekomponente eine Elektrodeneinrichtung und eine daran angeschlossene elektronische Schaltung umfasst, und dass über die Elektrodeneinrichtung im Bereich eines Selektionsabschnittes ein elektrisches Feld nach Maßgabe eines Datenmusters moduliert und in den Anwender eingekoppelt wird.

## Claims

1. An electrical circuit arrangement having:
- an input component (1) for carrying out a selection process for generating an input event, and
- a switching component (11) for generating a switching signal on the base of a signal-processing evaluation of the input event,
- the input component being constructed in such a way that, in the framework of said selection process, the input event is injected into a user actuating the input component on the base of the interactive effect of electric fields, and
- said switching component is provided with an interface device (5) for detecting the input event injected into the user,
- the input component and the interface device being placed in the operating position in such a way that signal transmission between the input component and the interface device is carried out with the involvement of the user (4) into a signal transmission path when the user actuates the input component,
**characterized in that**
the input component comprises an input field for carrying out a range selection or a number pad.

2. The circuit arrangement according to Claim 1, **characterized in that** the input component comprises a display device.

3. The circuit arrangement according to Claim 1 or 2, **characterized in that** the input component is designed as a freely mountable, essentially flat input surface element.

4. The circuit arrangement according to at least one of Claims 1 to 3, **characterized in that** the input component is designed as a film structure.

5. The circuit arrangement according to at least one of Claims 1 to 4, **characterized in that** the input component is provided with an adhesive back.

6. The circuit arrangement according to at least one of Claims 1 to 5, **characterized in that** the interface device is integrated into a seat device, a steeringwheel device, a door-handle device.

7. The circuit arrangement according to at least one of Claims 1 to 6, **characterized in that** the input component comprises an electrode device and an electronic circuit connected thereto and that using the electrode device in the range of the selection section an electric field is modulated as per a data pattern and injected into the user.

## Revendications

1. Agencement de circuit électrique comportant :
- un composant d'entrée (1) pour exécuter un processus de sélection en vue de générer un événement d'entrée, et
- un composant de commutation (11) en vue de générer un signal de commutation sur la base d'un dépouillement traitant le signal de l'événement d'entrée,
- le composant d'entrée étant configuré de manière à ce que, dans le cadre du processus de sélection, le résultat de l'entrée est injecté sur la base d'effets interactifs de champs électriques dans un utilisateur actionnait le composant d'entrée, et
- que le composant de commutation comprend un dispositif d'interface (5) pour saisir l'événement d'entrée injecté dans l'utilisateur,
- le composant d'entrée et le dispositif d'interface placés en position d'utilisation étant disposés de manière à ce que le transfert de signal entre le composant d'entrée et le dispositif d'interface s'exécute en intégrant l'utilisateur (4) dans un trajet de transmission de signal lorsque l'utilisateur actionne le composant d'entrée,
**caractérisé en ce que**
le composant d'entrée présente une surface d'entrée pour opérer une sélection de zone, ou une surface de numéros et/ou de chiffres.

2. Agencement de circuit électrique selon la revendication 1, **caractérisé en ce que** le composant d'entrée comprend un dispositif de visualisation.

3. Agencement de circuit électrique selon la revendication 1 ou 2, **caractérisé en ce que** le composant d'entrée est configuré comme élément de surface plane.

4. Agencement de circuit électrique selon au moins l'une des revendications 1 à 3, **caractérisé en ce que** le composant d'entrée est configuré comme structure en film.

5. Agencement de circuit électrique selon au moins l'une des revendications 1 à 4, **caractérisé en ce que** le composant d'entrée est muni d'un dos adhésif.

6. Agencement de circuit électrique selon au moins l'une des revendications 1 à 5, **caractérisé en ce que** le dispositif d'interface est intégré dans un dispositif de siège, un dispositif de volant, un dispositif de poignée de porte.

7. Agencement de circuit électrique au moins l'une des revendications 1 à 6, **caractérisé en ce que** le composant d'entrée comprend un dispositif à électrodes et un circuit électronique y raccordé et que par l'intermédiaire du dispositif à électrodes dans la zone d'une section de sélection un champ électrique est modulé d'après un dessin de données et injecté dans l'utilisateur.
